(19) Europäisches Patentamt
European Patent Office
Office européen des brevets

(11) **EP 3 244 570 B1**

(12) **EUROPEAN PATENT SPECIFICATION**

(45) Date of publication and mention
of the grant of the patent:
**12.12.2018 Bulletin 2018/50**

(51) Int Cl.:
***H04L 12/24*** *(2006.01)*     ***H04L 29/08*** *(2006.01)*

(21) Application number: **16290075.7**

(22) Date of filing: **09.05.2016**

(54) **METHOD OF AND DEVICE FOR DETERMINING RELIABILITY IN A COMPUTER NETWORK**

VERFAHREN UND VORRICHTUNG ZUR BESTIMMUNG DER ZUVERLÄSSIGKEIT IN EINEM COMPUTERNETZWERK

PROCÉDÉ ET DISPOSITIF DE DÉTERMINATION DE FIABILITÉ DANS UN RÉSEAU INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.11.2017 Bulletin 2017/46**

(73) Proprietor: **Alcatel Lucent**
**91620 Nozay (FR)**

(72) Inventors:
• **Istemi, Akkus**
  **70435 Stuttgart (DE)**
• **Ivica, Rimac**
  **70435 Stuttgart (DE)**
• **Ruichuan, Chen**
  **70435 Stuttgart (DE)**
• **Bimal, Viswanath**
  **70435 Stuttgart (DE)**
• **Volker, Hilt**
  **70435 Stuttgart (DE)**

(74) Representative: **Nokia EPO representatives**
**Nokia Technologies Oy**
**Karaportti 3**
**02610 Espoo (FI)**

(56) References cited:
**GB-A- 2 515 554**     **US-A1- 2003 023 751**
**US-A1- 2004 230 953**     **US-A1- 2012 254 669**
**US-A1- 2014 086 065**     **US-B1- 9 148 479**

## Description

### Field of the invention

The invention concerns a method of and a device for determining reliability in a computer network.

### Background

In a computer network, network nodes are computer devices, such as hosts, adapted for data exchange via data links connecting the network nodes.

Networking hardware comprises network nodes, such as gateways, routers, or switches, adapted to connect other network nodes, e. g. hosts, by wireless or wired data links, for example using Ethernet and Transmission Control Protocol / Internet Protocol.

A host is adapted to execute a computer program to provide an application that is accessible via the computer network. An application is designed to perform a function or a task for a user.

If a network node fails, an application may not be available. Depending on the purpose of the application, operation of the computer network with certain reliability for the availability of the application is crucial.

Using redundant network nodes is one way to increase reliability regarding the availability of the application.

By use of redundant hosts, each executing the application, or by use of redundant networking hardware, to access a host executing the application, the reliability may be increased.

GB 2515554 A discloses a method of maintaining the operability of a network-connected data processing apparatus, that is coupled to a host computer, and handles operations on behalf of the host computer, wherein the host in response to a request for failover from a first resource to a second resource, tests the availability of the second resource for handling operations on its behalf. In response to a positive determination of the availability of the second resource, the host initiates the failover to the second resource, and in response to a negative determination of the availability of the second resource, the host provides an indication of unavailability.

US 2004/0230953 A1 discloses a software application reliability and availability tracking and reporting mechanism that collects event data from target computers, analyses the data, and produces reliability and availability reports.

US 9,148,479 B1 discloses a computer-implemented method for determining the healthiness of nodes within computer clusters in which it is determined based on a node's performance, whether the node is sufficiently healthy to execute an application.

In data centers many hosts connected via different networking hardware may be used to increase reliability of the availability of an application. For access to the application, organizationally or geographically separate zones of network nodes and data links may be used. This allows access control to the application or to minimize the risk of unavailability of the application in one zone in case of a failure in another zone.

However, when many redundant hosts and/or a lot of redundant networking hardware are used, the complexity of the resulting computer network is high.

In highly complex computer networks, the availability of the application depends on the availability of many different network nodes or data links. Furthermore, the application may be scaled in accordance to a current user demand for the application. This means that copies of the application may be executed on hosts or not, depending on the current user demand.

These factors affect the availability of a specific application. Therefore it is desirable to determine the reliability of the availability independent from the application.

### Summary

It is therefore an objective of the present invention to determine the reliability of the availability independent of the application in a scalable, complex computer network, in particular for reuse independently from the application.

This goal is achieved by a method according to claim 1 comprising:

testing, at a host, for at least one predetermined path between the host and a predetermined network node, if an alternative predetermined path between the host and the predetermined network node exists,

determining, at the host, information regarding reliability of the availability of the host based on the result of the test. This allows scalability of the method to determine reliability via computation at individual hosts. The method can be applied in a data center of any size, so that the number of network nodes, i.e. hosts and switches, in the data center network is not a limiting factor. The reason is that the method to determine the failure scenarios can be run in parallel by every host.

The method comprises
determining at least one combination of network nodes in the at least one predetermined path and in the alternative path. This way a host combines any node on one path with nodes from alternative paths, such that one node per alternative path is selected for one combination.

The method comprises
determining at least one group of network nodes depending on the information about the at least one combination, determining at least one failure scenario for the host depending on the at least one group of network nodes, and determining the information regarding reliability of the availability of the host depending on the at least one failure scenario. This way, combinations of network nodes form the basis of minimal risk groups and the failure scenarios of a host.

Preferably the method comprises sending the information regarding the reliability addressed to a network node.

This allows scalability of the method to determine reliability via computation of minimal risk groups at the individual hosts by running individual failure scenarios in parallel by every host and providing this information regarding the reliability to a network node for further processing.

This goal is further achieved by a method comprising:

receiving information, originating at least at one host, regarding reliability of the availability of the host,
determining information regarding reliability of the availability of an application in the computer network based on the received information.

The method comprises selecting at least one host for executing a copy of the application from a plurality of hosts depending on information regarding the reliability of at least one path between the respective hosts and a predetermined network node.

Preferably the method comprises operating the computer network for executing a copy of the application on at least one host depending on the information regarding the reliability of the availability of the host.

Preferably the method comprises selecting at least one host for executing a copy of the application depending on the information regarding reliability of the availability of the application.

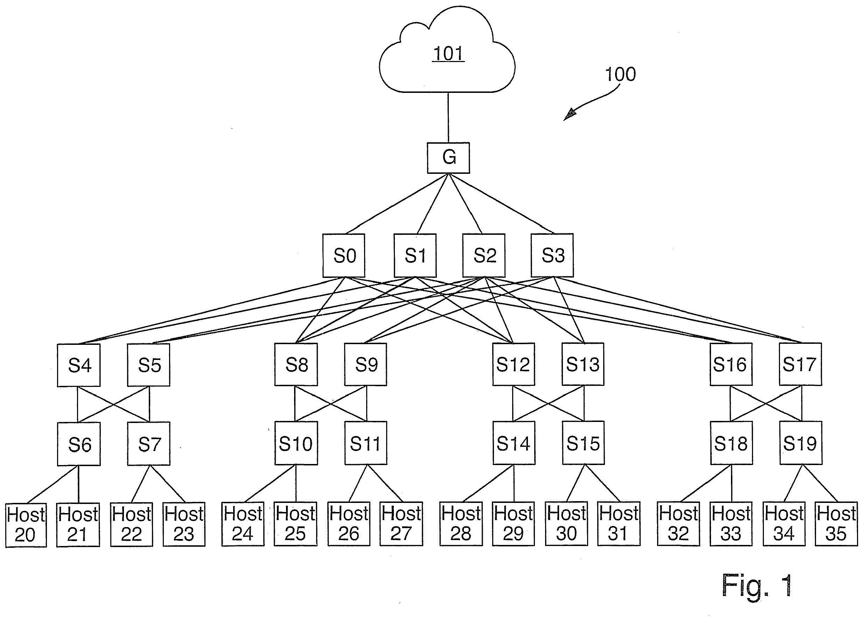

Figure 1 schematically depicts part of a computer network 100.

In the example computer network 100 is part of a data center. In the example in figure 1 the data center has a fat tree topology for connecting network nodes. For illustration purposes only, it is assumed that the data center consist of 16 hosts labelled in figure 1 as Host 20, ..., Host 35.

However the invention is not limited to this exact topology or number of network nodes. The invention also applies for different numbers of network nodes, data links or topologies and when multiple data centers or computer networks are connected.

The computer network 100 in the example comprises a gateway G. Gateway G is a network node that connects to the Internet, symbolized by a cloud 101. In the example, Ethernet and Transmission Control Protocol / Internet Protocol are used for connecting network nodes and Internet via data links.

The computer network 100 comprises a first host, Host 20, a second host, Host 22, and a third host, Host 24, Host 20, the second host, Host 22 and the Host 24 in the example are network nodes adapted to execute a copy of an application. In the example the other hosts, i.e. Host 21, Host 23, Host 25, and Host 35 are not adapted to execute a copy of the application. However any of the hosts may be configured to execute a copy of the application on demand. This way the application is scalable depending on demand.

The application is accessible from the internet via gateway G on either of the hosts adapted to execute the application.

In computer network 100 gateway G is connected to core switches S0, S1, S2, S3 via respective data links.

Core switches S0 and S1 are connected to switches S4, S8, S12 and S16 with respective data links. Core switches S2 and S3 are connected to switches S5, S9, S13 and S17 with respective data links.

Switches S4 and S5 are connected to switches S6 and S7 with respective data links. Switch S6 is connected to Host 20 and Host 21 with respective data links. Switch S7 is connected to Host 22 and Host 23 with respective data links.

Switches S8 and S9 are connected to Switches S10 and S11 with respective data links. Switch S10 is connected to Host 24 and Host 25 with respective data links. Switch S11 is connected to Host 26 and Host 27 with respective data links.

Switches S12 and S14 are connected to switches S14 and S15 with respective data links. Switch S14 is connected to Host 28 and Host 29 with respective data links. Switch S15 is connected to Host 30 and Host 31 with respective data links.

Switches S16 and S17 are connected to switches S18 and S19 with respective data links. Switch S18 is connected to Host 32 and Host 33 with respective data links. Switch S19 is connected to Host 34 and Host 35 with respective data links.

The aforementioned switches are network nodes in the computer network 100. Other network nodes, e.g.

routers or further gateways may be used as well.

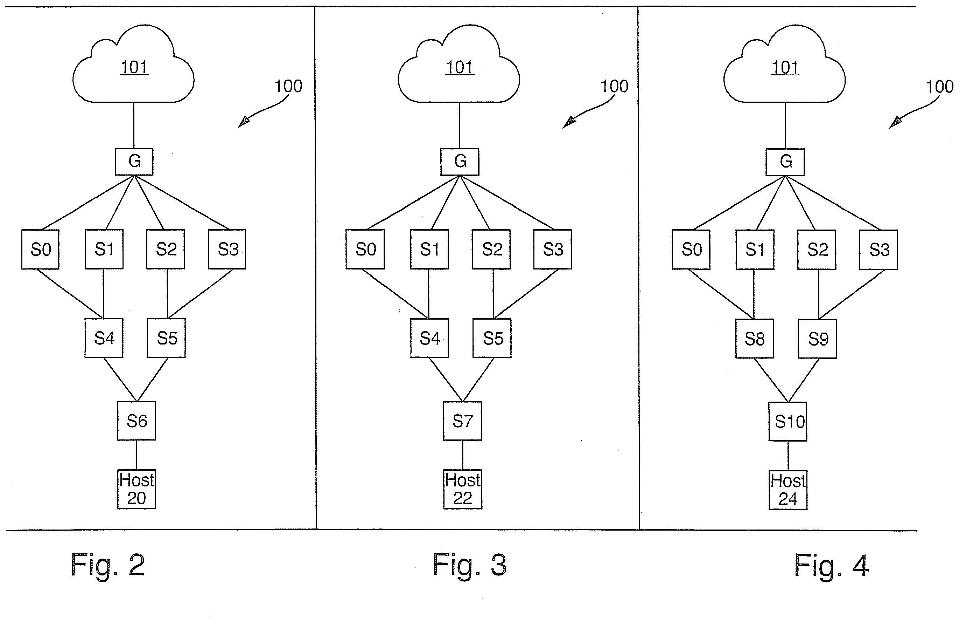

Figure 2 schematically depicts part of the computer network 100 between Host 20 and the gateway G.

The possible paths from Host 20 to gateway G are:

Host 20-S6-S4-S0-G
Host 20-S6-S4-S1-G
Host 20-S6-S5-S2-G
Host 20-S6-S5-S3-G

Figure 3 schematicallydepicts part of the computer network 100 between Host 22 and the gateway G.

The possible paths from Host 22 to gateway G are:

Host 22-S7-S4-S0-G
Host 22-S7-S4-S1-G
Host 22-S7-S5-S2-G
Host 22-S7-S5-S3-G

Figure 4 schematically depicts part of the computer network 100 between Host 24 and the gateway G.

The possible paths from Host 24 to gateway G are:

Host 24-S10-S8-S0-G

Host 24-S10-S8-S1-G

Host 24-S10-S9-S2-G

Host 24-S10-S9-S3-G

Available paths may dynamically change, e.g. depending on load and the hosts that are used to execute copies of the application. A deployment of an application may be implemented depending on the demand for the application. From available deployment options a deployment may be implemented by selecting the hosts that shall execute copies of the application. The deployment is designed to improve the availability of an application by executing copies of applications on different hosts. This may be implemented by selecting the hosts and/or the paths that are available or not available or the number of copies of an application. Requests to the application are routed by the gateway G to any available of the hosts executing a copy of the application.

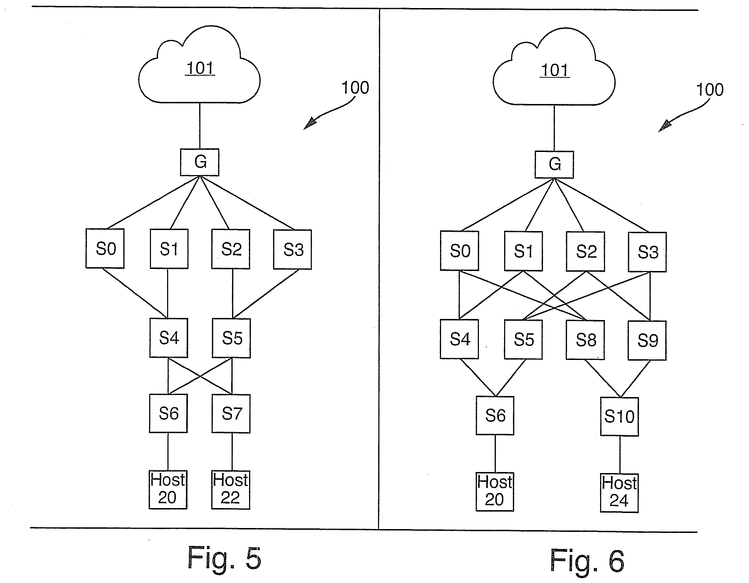

Figure 5 schematically depicts a first deployment in the computer network 100. In the first deployment, a copy of the application is executed on each of Host 20 and Host 22.

According to the first deployment, the following paths between Host 20 and the gateway G and Host 24 and the gateway G are configured to be available:

Host 20-S6-S4-S0-G
Host 20-S6-S4-S1-G
Host 20-S6-S5-S2-G
Host 20-S6-S5-S3-G

Host 22-S7-S8-S0-G
Host 22-S7-S8-S1-G
Host 22-S7-S9-S2-G
Host 22-S7-S9-S3-G

Figure 6 schematically depicts a second deployment in the computer network 100. In the second deployment, a copy of the application is executed on each of Host 20 and Host 24.

According to the second deployment, the following paths between Host 20 and the gateway G and Host 22 and the gateway G are configured to be available:

Host 20-S6-S4-S0-G
Host 20-S6-S4-S1-G
Host 20-S6-S5-S2-G

Host 20-S6-S5-S3-G

Host 24-S10-S4-S0-G
Host 24-S10-S4-S1-G
Host 24-S10-S5-S2-G
Host 24-S10-S5-S3-G

An exemplary method for determining reliability of the availability of the application in a scalable, complex computer network is given below.

In the example the hosts in the data center are adapted to compute their respective failure scenarios. As a result, the computation of failure scenarios can take place in parallel at every host. This way the failure scenarios are computed without increasing the load on each host significantly. Furthermore scaling depending on demand is easily possible e.g. in data centers consisting of tens of thousands of hosts.

To compute the failure scenario the host is adapted to test for at least one predetermined path between the host and the gateway G if an alternative predetermined path between the host and the gateway G exists.

In the example, for Host 20, the Host 22 and Host 24, the predetermined paths are given as possible paths from the respective host to gateway G above.

Instead of gateway G any predetermined network node may be destination of the path.

Additionally the host is adapted to determine information regarding reliability of the availability of the application on the host based on the result of the test.

Advantageously the host is adapted for determining at least one combination of network nodes in the at least one predetermined path and in the alternative path.

Furthermore the host may be adapted to

determine at least one group of network nodes depending on the information about the at least one combination,

determine at least one failure scenario for the host depending on the at least one group of network nodes, and

determine the information regarding reliability of the availability of the host depending on the at least one failure scenario.

An exemplary calculation for determining this information is at Host 20 according to the first deployment is given below referencing the following source code.

```
function CRG(node, destination):
    // compute risk groups
    // base case
    if node == destination:
        rglist = new List()
        rglist.add(destination)
        return rglist

    // collect node's neighbours' risk group lists to cross product later
    // nrglist is a list of lists
    nrglist = new List()
    for neighbour in node.neighbours:
        // recursively find each neighbour's risk groups
        nrglist = CRG(neighbour)
        nrglist.add(nrglist)

    product = nrglist[0];
    for (i = 1; i < nrglist.length; i++)
        product = cross_product_unoptimized(product, nrglist[i])

    // risk groups for node: node + product
    node_rglist = new List()
    node_rglist.add(node)
    node_rglist.addAll(product)

    return node_rglist

function cross_product_unoptimized(list1, list2):
    product = new List()
    for (i = 0; i < list1.len; i++)
        for (j = 0; j < list2.len; j++)
            product.add(list1[i] x list2[j])

    // remove any redundant groups that show up in the cross product
    product = findAndRemoveRedundant(product)

    return product

function findAndRemoveRedundant(list):
    // 1. find the redundant terms
    redundant = new List()
    for (i = 0; i < list.length; i++)
        for (j = 0; j < list.length; j++)
            if (i == j):
                continue
            if (list[i].includes(list[j])):
                redundant.add(list[i])
                break

    // 2. remove the redundant terms
    newlist = new List()
    for (i = 0; i < list.length; i++)
        // if list[i] is not in the redundant list, j == -1
        j = redundant.indexOf(list[i])
        // list[i] is not redundant; keep it in our list
        if (j == -1):
            newlist.add(list[i])

    return newlist
```

The exemplary implementation of the code may be stored on and executed by a processor of any host. This applies to any other host in similar manner.

A host, e.g. host 20, will first determine the alternative paths starting from the host to a predetermined network node, e.g. gateway G. Then the host combines any network node on one path with network nodes from alternative paths, such that one network node per alternative path is selected for one combination. These combinations, produced by the method, e.g. using the algorithm implemented according to the source code above, are minimal risk groups. Each of these minimal risk groups is a failure scenario for the host. From these failure scenarios, the reliability of the availability of the host is determined.

In the example, the following are the alternative paths for host 20..

Path1: Host 20-S6-S4-S0-G
Path2: Host 20-S6-S4-S1-G
Path3: Host 20-S6-S5-S2-G
Path4: Host 20-S6-S5-S3-G

One exemplary combination hence is (S6, S6, S6, S6). From this combination results the minimal risk group (S6).

Another combination is (S6, S4, S2, S3). The combination (S6, S4, S2, S3) is not minimal, because (S6) itself is a minimal risk group. In other words, if S6 fails, the host will lose connectivity to G, so there is no need for S4, S2, S3 to fail.

Another combination is (S4, S4, S5, S5). From this combination results the minimal risk group (S4, S5).

Another combination is (S0, S1, S2, S3). This results in minimum risk group (S0, S1, S2, S3).

The other combinations not listed above may be processed accordingly. However the algorithm according to the example does not produce all of the combinations, but just the minimal ones.

For the exemplary topology the minimal risk groups resulting from executing the method described below are (Host 20), (S6), (S4, S5), (S4, S2, S3), (S5, S0, S1), (S0, S1, S2, S3) and (G). After the start of the method, neighbors of Host 20 are identified. For an exemplary implementation see lines 9 to 11 of the source code above. According to the first deployment, switch S6 is the only neighbor. The destination considered in the first deployment is the gateway G.

The risk groups for Host 20 to fail therefore consists of Host 20 and further risk groups that come after switch S6.

The risk groups are computed in the example using a recursive computation, e.g. implemented as a recursive function call of a function CRG. For an exemplary implementation see lines 12 to 15 of the source code above.

$$\text{Equation 1: } CRG(Host20) = Host20 + CRG(S6)$$

This process continues similarly for switch S6. The risk groups of switch S6 consist of switch S6 itself and the cross product of the risk groups of its neighbors. For an exemplary implementation see lines 17 to 19 of the source code above.

$$\text{Equation 2: } CRG(S6) = S6 + (CRG(S4) \times CRG(S5))$$

This recursive calculation is processed until the network node considered for calculating the risk group is the destination. In the example, the recursion ends when gateway G is reached. For an exemplary implementation of the recursive calculation see lines 4 to 7 the source code above.

This results in the following equations:

$$\text{Equation 3: } CRG(S4) = S4 + (CRG(S0) \times CRG(S1))$$

$$\text{Equation 4: } CRG(S0) = S0 + CRG(G)$$

$$\text{Equation 5: } CRG(S1) = S1 + CRG(G)$$

$$\text{Equation 6: } CRG(G) = G$$

$$\text{Equation 7: } CRG(S5) = S5 + (CRG(S2) \times CRG(S3))$$

$$\text{Equation 8: } CRG(S2) = S2 + CRG(G)$$

$$\text{Equation 9: } CRG(S3) = S3 + CRG(G)$$

Substituting the values and rewriting Equation 3 using Equations 5 and 6 results in:

$$\text{Equation 10: } CRG(S4) = S4 + ((S0 + G) \times (S1 + G)) = S4 + (S0xS1) + (S0xG) + (S1xG) + G = S4 + (S0xS1) + G$$

Afterwards redundant terms are identified and eliminated.
In the example the terms (S0xG) and (SlxG) are redundant because (G) is in the term. In other words, if gateway G fails, then links from core switch S0 via gateway G and from core switch S1 via gateway G fail.
Therefore, S0xG and SlxG are redundant. These redundant terms are removed from the risk group list after a corresponding cross product is computed. For an exemplary implementation see line 35 of the source code above.
Similarly, rewriting Equation 4 using equations 7 and 8, results in:

$$\text{Equation 11: } CRG(S5) = S5 + ((S2 + G) \times (S3 + G)) = S5 + (S2xS3) + G$$

Rewriting Equation 2 using Equations 9 and 10 and removing redundant terms, results in:

$$\text{Equation 12: } CRG(S6) = S6 + ((S4 + (S0xS1) + G) \times (S5 + (S2xS3) + G)) = S6 + S4xS5 + S4xS2xS3 + S0xS1xS5 + S0xS1xS2xS3 + G$$

This results in the minimal risk groups for the example:

$$\text{Equation 13: } CRG(Host20) = Host20 + S6 + S4xS5 + S2xS3xS4 + S0xS1xS5 + S0xS1xS2xS3 + G$$

The minimal risk groups constitute a potential failure scenario for Host 20. In other words, one of the following failure scenarios have to happen for Host 20 not be able to reach the outside world:

Scenario 1: Host20 itself fails.
Scenario 2: The switch S6 fails.
Scenario 3: The switches S4 and S5 fail at the same time.
Scenario 4: The switches S2, S3 and S4 fail at the same time.
Scenario 5: The switches S0, S1 and S5 fail at the same time.
Scenario 6: The switches S0, S2, S2 and S3 fail at the same time.
Scenario 7: The gateway G fails.

As a result, information regarding the reliability is available.

Preferably each host computes its own failure scenarios according to the available paths it can take to reach a predetermined network node, e.g. gateway G. These paths are based on the routing decisions taken by the cloud service provider, which in many cases are obtained via well-defined rules according to the hierarchical topology in the data center. After obtaining the paths, the host follows the aforementioned recursive algorithm to identify the pieces of network equipment, that need to fail during overlapping time periods to prevent the host from communicating with the predetermined network node, e.g. gateway G.

Based on the routing decisions, every host knows the alternative paths that can be used to communicate with the predetermined node, e.g. gateway G. Such paths define the neighbours of each network node in a path. Every individual path has a list of nodes whose failure will make the path unusable for the host. The method then finds the combinations of these nodes belonging to different paths, such that all paths become unusable at the same time when the network nodes in a given combination fail during an at least partially overlapping time period.

These combinations form the aforementioned minimal risk groups. The event that all nodes in a minimal risk group fail constitutes a failure scenario for a host.

The host failure scenarios are then combined in a similar way (i.e., with combinations from different host risk groups) to derive at deployment failure scenarios.

Once the failure scenarios of the hosts configurable to execute the application are computed, information regarding the reliability is available. In the example the failure scenarios, e.g. information regarding the reliability, are combined to obtain the failure scenario of the first deployment. In the example they are combined in the gateway G. Any other network node that the data center provider configures accordingly may be used.

The failure scenario of any other deployment is determined similarly.

The hosts are adapted to send information regarding the reliability addressed to the gateway G. To that end the hosts comprise corresponding senders.

The gateway G receives in the example the information regarding the reliability of any host that sends this information.

The gateway G is adapted for receiving the information regarding reliability of the availability of the application on the host. Gateway G or the predetermined network node comprises a corresponding receiver. The information originates at least at one host configurable to execute an application copy.

The gateway G is further adapted for determining information regarding reliability of the availability of the application in the computer network based on the received information. For example an implementation of a corresponding method contains instructions processed by the processor of gateway G to determine this information.

By using failure statistics, i.e. failure probabilities, about the network nodes in the data center, the likelihood of each failure scenario, e. g. for a deployment, is calculated. The first deployment may have a different likelihood than the second deployment.

Combining the likelihoods of each failure scenario belonging to a deployment, the expected reliability for the application in the computer network is analytically and accurately computable. This may be done before the application is even deployed. For example the reliability values are proactively assessed.

This proactive assessment of reliability enables to determine and share expected reliability.

This information can be shared with an application developer, such that a better understanding about the application's reliability as a whole in a given deployment is available.

Preferably different deployments are used in different deployment plans with different expected reliability values. This allows offering different configurations for the customers.

Additionally, multiple deployment plans may be configured to find a deployment plan with a predetermined reliability. The predetermined reliability can be a predetermined value that is compared to the information about the reliability of the availability of an application.

For example, the predetermined reliability value may be used to determine the required number of hosts that execute application copies. To that end information regarding the reliability for multiple deployment scenarios may be determined as described above, the likelihoods may be combined as described above and the reliability of the availability of the application may be determined for each of the deployment scenarios. By comparing the reliability of the availability of the application with the predetermined reliability value, suitable deployment scenarios are identified. This way a deployment scenario that matches the application developer's reliability goals are found. This reduces the cost for the developer by reducing the number of copies required to match the goal, or helps the developer identify and prevent a potential reliability problem due to insufficient number of copies.

Preferably at least one host is selected for executing a copy of the application depending on the information regarding reliability of the availability of the application on the host.

Preferably at least one host is selected for executing a copy of the application from a plurality of hosts depending on information regarding the reliability of at least one path between the respective hosts and the predetermined network node, e.g. gateway G.

If in the example, a developer that wants to deploy an application on two instances, e.g. two hosts, and requires that at least one of them is reachable. Accordingly there are two possible deployment scenarios for the developer:

Deployment1: Host20 and Host22
Deployment2: Host20 and Host24

These deployments and the paths from the hosts to the destination are shown in Figures 5 and 6 as first and second deployment respectively.

The failure scenarios of Host 20, Host 22 and Host 24 are computed as described above.

The minimum risk groups for the Host 20 have been determined in Equation 13 above.

For Host 22 and Host 24 the minimum risk groups are described as:

$$Equation\ 14:\ CRG(Host22)\ =\ Host22\ +\ S7\ +\ S4xS5\ +\ S2xS3xS4\ +$$
$$S0xS1xS5\ +\ S0xS1xS2xS3\ +\ G$$

$$Equation\ 15:\ CRG(Host24)\ =\ Host24\ +\ S10\ +\ S8xS9\ +\ S2xS3xS8$$
$$+\ S0xS1xS9\ +\ S0xS1xS2xS3\ +\ G$$

Combining the failure scenarios of the hosts in the two deployment options result in the respective deployment failure scenarios:

$$Equation\ 16:\ CRG(Deployment1)\ =\ CRG(Host20)\ x\ CRG(Host22)$$

$$Equation\ 17:\ CRG(Deployment2)\ =\ CRG(Host20)\ x\ CRG(Host24)$$

This may be inserting Equations 13, Equation 14 and Equation 15 in Equation 16 and Equation 17 respectively results in:

$$Equation\ 18:\ CRG(Deployment1)\ =\ (Host20\ +\ S6\ +\ S4xS5\ +$$
$$S2xS3xS4\ +\ S0xS1xS5\ +\ S0xS1xS2xS3\ +\ G)\ x\ (\ Host22\ +\ S7\ +$$
$$S4xS5\ +\ S2xS3xS4\ +\ S0xS1xS5\ +\ S0xS1xS2xS3\ +\ G)$$
$$=\ Host20xHost22\ +\ Host20xS7\ +\ Host22xS6\ +\ S4xS5\ +\ S2xS3xS4$$
$$+\ S0xS1xS5\ +\ S0xS1xS2xS3\ +\ G$$

```
Equation 19: CRG(Deployment2) =  (Host20 + S6 + S4xS5 +

S2xS3xS4 + S0xS1xS5 + S0xS1xS2xS3 + G) x (Host24 + S10 +

S8xS9 + S2xS3xS8 + S0xS1xS9 + S0xS1xS2xS3 + G)

= Host20xHost24 + Host20xS10 + Host20xS8xS9 +

Host20xS2xS3xS8 + Host20xS0xS1xS9 + Host24xS6 +

Host24xS4xS5 + Host24xS2xS3xS4 + Host24xS0xS1xS3 +

S0xS1xS2xS3 + G
```

According to the probabilities of each of these events happening (e.g., the probability of a host or network equipment failing), the expected reliability of each deployment option is calculated. In the example, the second deployment Deployment2 is the more reliable option, because the failure scenarios of the hosts selected in the second deployment Deployment2 have more independent components.

Preferably this way the deployment comprises a plurality of hosts for executing copies of the application and a first deployment is selected from a plurality of deployments depending on the information regarding reliability of the availability of the application resulting from the respective deployment.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any sequence diagrams represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

**Claims**

1.  A method comprising:

       testing, at a host (Host 20, Host 22, Host 24), for at least one predetermined path between the host (Host 20, Host 22, Host 24) and a predetermined network node (G), if an alternative predetermined path between the host (Host 20, Host 22, Host 24) and the predetermined network node (G) exists,

determining, at the host (Host 20, Host 22, Host 24), information regarding reliability of the availability of the host (Host 20, Host 22, Host 24) based on the result of the test, **characterized in** the method further comprising determining at least one combination of network nodes in the at least one predetermined path and in the alternative path,

determining at least one group of network nodes depending on the information about the at least one combination of network nodes,

determining at least one failure scenario for the host (Host 20, Host 22, Host 24) depending on the at least group of network nodes, and

determining the information regarding reliability of the availability of the host (Host 20, Host 22, Host 24) depending on the at least one failure scenario.

**2.** A device (Host 20, Host 22, Host 24) operable as host for executing an application in a computer network (100) configurable for:

testing for at least one predetermined path between the host (Host 20, Host 22, Host 24)and a predetermined network node (G), if an alternative predetermined path between the host (Host 20, Host 22, Host 24) and the predetermined network node (G) exists,

determining information regarding reliability of the availability of the host (Host 20, Host 22, Host 24) based on the result of the test,

**characterized in** the device (Host 20, Host 22, Host 24) further configurable for

determining at least one combination of network nodes in the at least one predetermined path and in the alternative path,

determining at least one group of network nodes depending on the information about the at least one combination,

determining at least one failure scenario for the host (Host 20, Host 22, Host 24) depending on the at least one group of network nodes, and

determining the information regarding reliability of the availability of the host (Host 20, Host 22, Host 24) depending on the at least one failure scenario.

## Patentansprüche

**1.** Verfahren, umfassend:

Testen bei einem Host (Host 20, Host 22, Host 24) hinsichtlich wenigstens eines vorbestimmten Pfades zwischen dem Host (Host 20, Host 22, Host 24) und einem vorbestimmten Netzwerkknoten (G), ob zwischen dem Host (Host 20, Host 22, Host 24) und dem vorbestimmten Netzwerkknoten (G) ein alternativer vorbestimmter Pfad vorhanden ist,

Bestimmen bei dem Host (Host 20, Host 22, Host 24) von Informationen, die die Zuverlässigkeit der Verfügbarkeit des Hosts (Host 20, Host 22, Host 24) betreffen, auf der Grundlage des Ergebnisses des Tests,

**dadurch gekennzeichnet, dass**:

das Verfahren ferner umfasst:

Bestimmen wenigstens einer Kombination von Netzwerkknoten auf dem wenigstens einen vorbestimmten Pfad und auf dem alternativen Pfad,

Bestimmen wenigstens einer Gruppe von Netzwerkknoten in Abhängigkeit von den Informationen über die wenigstens eine Kombination von Netzwerkknoten,

Bestimmen wenigstens eines Fehlerszenarios für den Host (Host 20, Host 22, Host 24) in Abhängigkeit von der wenigstens einen Gruppe von Netzwerkknoten, und

Bestimmen der Informationen, die die Zuverlässigkeit der Verfügbarkeit des Hosts (Host 20, Host 22, Host 24) betreffen, in Abhängigkeit von dem wenigstens einen Fehlerszenario.

**2.** Vorrichtung (Host 20, Host 22, Host 24), die sich als Host zum Ausführen einer Anwendung in einem Computernetzwerk (100) betreiben lässt und für folgende Schritte konfigurierbar ist:

Testen mit Blick auf wenigstens einen vorbestimmten Pfad zwischen dem Host (Host 20, Host 22, Host 24) und einem vorbestimmten Netzwerkknoten (G), ob zwischen dem Host (Host 20, Host 22, Host 24) und dem vorbestimmten Netzwerkknoten (G) ein alternativer vorbestimmter Pfad vorhanden ist,

Bestimmen von Informationen, die die Zuverlässigkeit der Verfügbarkeit des Hosts (Host 20, Host 22, Host 24) betreffen, auf der Grundlage des Ergebnisses des Tests,

**dadurch gekennzeichnet, dass**:

die Vorrichtung (Host 20, Host 22, Host 24) ferner für Folgendes konfigurierbar ist:

Bestimmen wenigstens einer Kombination von Netzwerkknoten auf dem wenigstens einen vorbestimmten Pfad und auf dem alternativen Pfad,

Bestimmen wenigstens einer Gruppe von Netzwerkknoten in Abhängigkeit von den Informationen über die wenigstens eine Kombination,

Bestimmen wenigstens eines Fehlerszenarios für den Host (Host 20, Host 22, Host 24) in Abhängigkeit von der wenigstens einen Gruppe von Netzwerkknoten, und

Bestimmen der Informationen, die die Zuverlässigkeit der Verfügbarkeit des Hosts (Host 20, Host 22, Host 24) betreffen, in Abhängigkeit von dem wenigstens einen Fehlerszenario.

**Revendications**

1. Procédé comprenant :

le test, au niveau d'un hôte (Hôte 20, Hôte 22, Hôte 24), pour au moins un trajet prédéfini entre l'hôte (Hôte 20, Hôte 22, Hôte 24) et un noeud de réseau prédéfini (G), pour déterminer si un autre trajet prédéfini entre l'hôte (Hôte 20, Hôte 22, Hôte 24) et le noeud de réseau prédéfini (G) existe,

la détermination, au niveau de l'hôte (Hôte 20, Hôte 22, Hôte 24), d'informations concernant la fiabilité de la disponibilité de l'hôte (Hôte 20, Hôte 22, Hôte 24) sur la base du résultat du test, **caractérisé en ce que** le procédé comprend en outre

la détermination d'au moins une combinaison de noeuds de réseau dans l'au moins un trajet prédéfini et dans l'autre trajet,

la détermination d'au moins un groupe de noeuds de réseau en fonction des informations concernant l'au moins une combinaison de noeuds de réseau,

la détermination d'au moins un scénario de défaillance pour l'hôte (Hôte 20, Hôte 22, Hôte 24) en fonction de l'au moins un groupe de noeuds de réseau, et

la détermination des informations concernant la fiabilité de la disponibilité de l'hôte (Hôte 20, Hôte 22, Hôte 24) en fonction de l'au moins un scénario de défaillance.

2. Dispositif (Hôte 20, Hôte 22, Hôte 24) exploitable en tant qu'hôte pour exécuter une application dans un réseau informatique (100) configurable pour :

le test pour au moins un trajet prédéfini entre l'hôte (Hôte 20, Hôte 22, Hôte 24) et un noeud de réseau prédéfini (G), pour déterminer si un autre trajet prédéfini entre l'hôte (Hôte 20, Hôte 22, Hôte 24) et le noeud de réseau prédéfini (G) existe,

la détermination d'informations concernant la fiabilité de la disponibilité de l'hôte (Hôte 20, Hôte 22, Hôte 24) sur la base du résultat du test, **caractérisé en ce que**

le dispositif (Hôte 20, Hôte 22, Hôte 24) est en outre configurable pour

la détermination d'au moins une combinaison de noeuds de réseau dans l'au moins un trajet prédéfini et dans l'autre trajet,

la détermination d'au moins un groupe de noeuds de réseau en fonction des informations concernant l'au moins une combinaison,

la détermination d'au moins un scénario de défaillance pour l'hôte (Hôte 20, Hôte 22, Hôte 24) en fonction de l'au moins un groupe de noeuds de réseau, et

la détermination des informations concernant la fiabilité de la disponibilité de l'hôte (Hôte 20, Hôte 22, Hôte 24) en fonction de l'au moins un scénario de défaillance.

Fig. 1

Fig. 2          Fig. 3          Fig. 4

EP 3 244 570 B1

Fig. 5

Fig. 6

**EP 3 244 570 B1**

**Patent documents cited in the description**

- GB 2515554 A
- US 20040230953 A1
- US 9148479 B1